# DEMANDE DE BREVET EUROPEEN

(11) **EP 2 921 281 A1**
(43) Date de publication de la demande: **23.09.2015**
(21) Numéro de dépôt: 15159252.4
(22) Date de dépôt: 16.03.2015
(51) Int. Cl.: B29C 63/04, B29C 65/08, B60R 13/02, B29K 75/00, B29K 23/00

(54) **PROCÉDÉ DE FINITION PÉRIPHÉRIQUE D'UN PANNEAU DE GARNISSAGE DE VÉHICULE AUTOMOBILE**

(30) Priorité: 18.03.2014 FR 1452239
(71) Demandeur: Cera APS, 51100 Reims (FR)
(72) Inventeur: Brillon, Eric, 51390 Rosnay (FR)
(74) Mandataire: Sayettat, Julien Christian

(57) **Abrégé**

L'invention concerne un procédé comprenant les étapes suivantes : prévoir une âme (2) structurelle en matériau rigide, ladite âme comprenant une face d'endroit (3), une face d'envers (4) et une tranche (5) reliant lesdites faces, ladite face d'endroit et ladite tranche étant revêtues d'une première couche (6) de revêtement, ladite couche étant à base d'un premier matériau fusible, ladite couche présentant une première bordure (7) périphérique saillant de ladite tranche ; rabattre ladite première bordure de manière à recouvrir une zone périphérique (8) de ladite face d'envers ; réaliser une soudure (9) par ultrasons en regard de ladite zone, en déplaçant ladite bordure en appui continu contre une sonotrode (10) ; ladite face d'envers étant revêtue d'une deuxième couche (13) de revêtement comprenant un deuxième matériau fusible, ladite deuxième couche présentant une deuxième bordure (14) périphérique, ladite première bordure étant rabattue contre ladite deuxième bordure de manière à recouvrir ladite zone périphérique, la soudure (9) étant réalisée entre lesdites bordures de manière à les associer directement l'une contre l'autre.

## Description

L'invention concerne un procédé de finition périphérique d'un panneau de garnissage de véhicule automobile.

Il est connu de mettre en oeuvre un procédé de finition périphérique d'un panneau de garnissage de véhicule automobile, ledit procédé comprenant les étapes suivantes :
- prévoir une âme structurelle en matériau rigide, ladite âme comprenant une face d'endroit, une face d'envers et une tranche reliant lesdites faces, ladite face d'endroit et ladite tranche étant revêtues d'une première couche de revêtement, ladite couche étant à base d'un premier matériau fusible, ladite couche présentant une première bordure périphérique saillant de ladite tranche,
- rabattre ladite première bordure de manière à recouvrir une zone périphérique de ladite face d'envers,
- réaliser une soudure par ultrasons en regard de ladite zone, en déplaçant ladite bordure en appui continu contre une sonotrode.

On rappelle que le soudage par ultrasons est une technique d'assemblage pour matériaux thermoplastiques.

Son principe consiste à appliquer une sonotrode - qui est un outil vibrant à une fréquence ultrasonore - contre la zone de soudure. Il se produit alors un échauffement réalisant une fusion du matériau thermoplastique, ce qui conduit à la soudure attendue. Les fréquences typiquement utilisées sont de 20 à 30 kHz.

Pour mettre en oeuvre le procédé sus-décrit, il est indispensable que l'âme soit à base de matériau fusible sous l'action de la sonotrode, faute de quoi la soudure ne peut être réalisée.

Se pose alors le problème de pouvoir réaliser la finition attendue par sonotrode lorsque l'âme n'est pas à base de matériau fusible.

L'invention a pour but de proposer un procédé de finition adapté aussi bien à une âme fusible que non fusible.

A cet effet, l'invention propose un procédé de finition périphérique d'un panneau de garnissage de véhicule automobile, ledit procédé comprenant les étapes suivantes :
- prévoir une âme structurelle en matériau rigide, ladite âme comprenant une face d'endroit, une face d'envers et une tranche reliant lesdites faces, ladite face d'endroit et ladite tranche étant revêtues - notamment par collage - d'une première couche de revêtement, ladite couche étant à base d'un premier matériau fusible, ladite couche présentant une première bordure périphérique saillant de ladite tranche,
- rabattre ladite première bordure de manière à recouvrir une zone périphérique de ladite face d'envers,
- réaliser une soudure par ultrasons en regard de ladite zone, en déplaçant ladite bordure en appui continu contre une sonotrode,
ladite face d'envers étant revêtue - notamment par collage - d'une deuxième couche de revêtement comprenant un deuxième matériau fusible, ladite deuxième couche présentant une deuxième bordure périphérique ladite première bordure étant rabattue contre ladite deuxième bordure de manière à recouvrir ladite zone périphérique, la soudure étant réalisée entre lesdites bordures de manière à les associer directement l'une contre l'autre.

Avec le procédé de finition proposé, la présence de la deuxième couche de revêtement, qui comprend un deuxième matériau fusible, permet de réaliser la finition attendue quelle que soit la nature de l'âme, fusible ou non fusible.

D'autres particularités et avantages de l'invention apparaîtront dans la description qui suit, faite en référence aux figures jointes, dans lesquelles :
- la figure 1 est une vue en coupe partielle d'un panneau selon un premier mode de réalisation,
- la figure 2 est une vue en coupe partielle d'un panneau selon un deuxième mode de réalisation,
- la figure 3 est une vue en perspective partielle et en coupe du panneau selon le premier mode de réalisation, ledit panneau étant représenté en cours de finition périphérique,
- la figure 4 est une vue correspondant à la figure 1, en perspective partielle et en coupe, du panneau selon le premier mode de réalisation une fois la finition périphérique achevée.

En référence aux figures, on décrit un procédé de finition périphérique d'un panneau 1 de garnissage de véhicule automobile - par exemple sous forme d'une tablette de recouvrement des bagages ou d'un faux plancher -, ledit procédé comprenant les étapes suivantes :
- prévoir une âme 2 structurelle en matériau rigide, ladite âme comprenant une face d'endroit 3, une face d'envers 4 et une tranche 5 reliant lesdites faces, ladite face d'endroit et ladite tranche étant revêtues - notamment par collage - d'une première couche 6 de revêtement, ladite couche étant à base d'un premier matériau fusible, ladite couche présentant une première bordure 7 périphérique saillant de ladite tranche,
- rabattre ladite première bordure de manière à recouvrir une zone périphérique 8 de ladite face d'envers,
- réaliser une soudure 9 par ultrasons en regard de ladite zone, en déplaçant ladite bordure en appui continu contre une sonotrode 10,
ladite face d'envers étant revêtue - notamment par collage - d'une deuxième couche 13 de revêtement comprenant un deuxième matériau fusible, ladite deuxième couche présentant une deuxième bordure 14 périphérique, ladite première bordure étant rabattue contre ladite deuxième bordure de manière à recouvrir ladite zone périphérique, la soudure 9 étant réalisée entre lesdites bordures de manière à les associer directement l'une contre l'autre.

La soudure 9 peut être réalisée sur tout ou partie de la périphérie du panneau 1.

Le premier et /ou le deuxième matériau fusible est par exemple du polyester, les matériaux étant notamment de même nature de manière à permettre un soudage optimal.

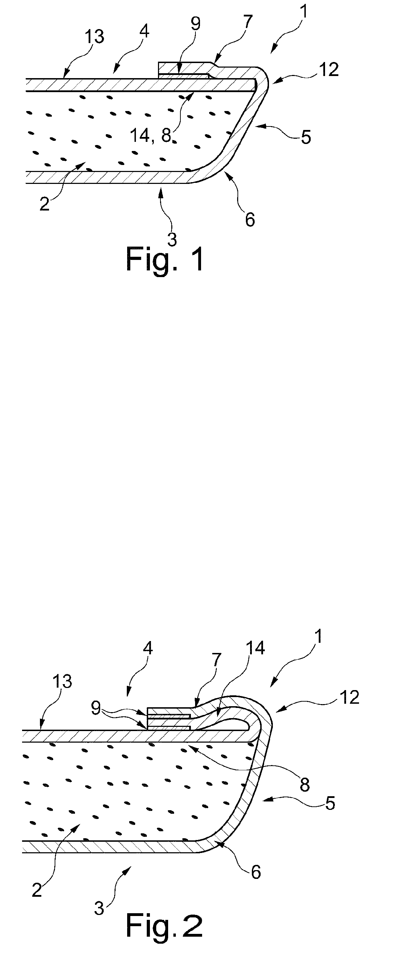

Selon la réalisation représentée en figures 1, 3 et 4, la deuxième bordure 14 périphérique s'étend en périphérie de la face d'envers 4.

Selon la réalisation représentée en figure 2, la deuxième bordure 14 est saillante de la face d'envers 4, la soudure 9 étant en outre réalisée entre ladite deuxième bordure et ladite deuxième couche, de manière à les associer directement l'une contre l'autre.

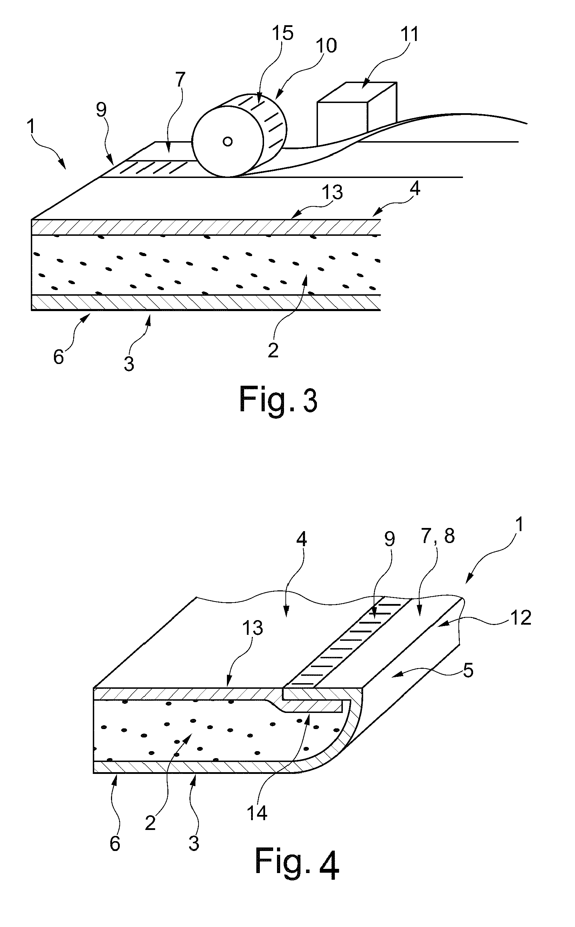

Selon une réalisation, comme représenté en figure 3, le repliement de la première bordure 7 est réalisé à mesure de la réalisation de la soudure 9.

En variante non représentée, il peut être prévu l'utilisation d'un cadre presseur réalisant en une fois le repliement de toute la première bordure 7.

Selon une réalisation, représentée en figure 3, la soudure 9 est réalisée en pinçant la périphérie du panneau 1 entre un support, non représenté, et une sonotrode 10 sous forme d'une molette actionnée en rotation.

La molette est ici pourvue de rainures 15 - orientées ici selon l'axe de rotation de ladite molette - permettant son ancrage efficace dans la première bordure 7, la mise en rotation de ladite molette réalisant un défilement de ladite bordure par rapport à ladite molette conduisant à la réalisation de la soudure 9 attendue.

Afin de réaliser le pincement attendu, on prévoit notamment de monter la sonotrode 10 sur un moyen ressort ou un vérin non représentés.

Selon une réalisation, le procédé prévoit de faire glisser en appui permanent, lors de l'opération de soudage, la tranche 5 contre une butée 11, afin de permettre de réaliser la soudure 9 à distance constante du bord 12 du panneau 1.

Selon une réalisation, la première bordure 7 présente une largeur comprise entre 10 et 25 mm.

Selon une réalisation, l'âme 2 est à base de matériau non fusible, étant notamment à base de mousse de polyuréthanne rigide ou semi-rigide.

Ceci étant, le procédé sus-décrit est applicable au cas d'une âme 2 à base de matériau fusible, étant notamment à base de polypropylène.

## Revendications

1. Procédé de finition périphérique d'un panneau (1) de garnissage de véhicule automobile, ledit procédé comprenant les étapes suivantes :
• prévoir une âme (2) structurelle en matériau rigide, ladite âme comprenant une face d'endroit (3), une face d'envers (4) et une tranche (5) reliant lesdites faces, ladite face d'endroit et ladite tranche étant revêtues - notamment par collage - d'une première couche (6) de revêtement, ladite couche étant à base d'un premier matériau fusible, ladite couche présentant une première bordure (7) périphérique saillant de ladite tranche,
• rabattre ladite première bordure de manière à recouvrir une zone périphérique (8) de ladite face d'envers,
• réaliser une soudure (9) par ultrasons en regard de ladite zone, en déplaçant ladite bordure en appui continu contre une sonotrode (10),
ledit procédé étant **caractérisé en ce que** ladite face d'envers est revêtue - notamment par collage - d'une deuxième couche (13) de revêtement comprenant un deuxième matériau fusible, ladite deuxième couche présentant une deuxième bordure (14) périphérique, ladite première bordure étant rabattue contre ladite deuxième bordure de manière à recouvrir ladite zone périphérique, la soudure (9) étant réalisée entre lesdites bordures de manière à les associer directement l'une contre l'autre.

2. Procédé selon la revendication 1, **caractérisé en ce que** la deuxième bordure (14) périphérique s'étend en périphérie de la face d'envers (4).

3. Procédé selon la revendication 1, **caractérisé en ce que** la deuxième bordure (14) est saillante de la face d'envers (4), la soudure (9) étant en outre réalisée entre ladite deuxième bordure et ladite deuxième couche, de manière à les associer directement l'une contre l'autre.

4. Procédé selon l'une quelconque des revendications 1 à 3, **caractérisé en ce que** le rabattement de la première bordure (7) est réalisé à mesure de la réalisation de la soudure (9).

5. Procédé selon l'une des revendications 1 à 4, **caractérisé en ce que** la soudure (9) est réalisée en pinçant la périphérie du panneau (1) entre un support et une sonotrode (10) sous forme d'une molette actionnée en rotation.

6. Procédé selon l'une quelconque des revendications 1 à 5, **caractérisé en ce qu'**il prévoit de faire glisser en appui permanent, lors de l'opération de soudage, la tranche (5) contre une butée (11), afin de permettre de réaliser la soudure (9) à distance constante du bord (12) du panneau (1).

7. Procédé selon l'une quelconque des revendications 1 à 6, **caractérisé en ce que** la première bordure (7) présente une largeur comprise entre 10 et 25 mm.

8. Procédé selon l'une quelconque des revendications 1 à 7, **caractérisé en ce que** l'âme (2) est à base de matériau non fusible, étant notamment à base de mousse de polyuréthanne rigide ou semi-rigide.

9. Procédé selon l'une quelconque des revendications 1 à 7, **caractérisé en ce que** l'âme (2) est à base de matériau fusible, étant notamment à base de polypropylène.
